# EUROPEAN PATENT SPECIFICATION

(11) **EP 1 362 693 B1**
(45) Date of publication and mention of the grant of the patent: **25.01.2006**
(21) Application number: 03010855.9
(22) Date of filing: 15.05.2003
(51) Int. Cl.: B32B 5/26, B29C 63/02, B32B 3/00

(54) **A method for making a composite element for upholstery and the composite element thus made**
Verfahren zur Herstellung eines Verbundelements für Polsterungen und dadurch erhaltenes Verbundelement
Procédé de fabrication d'un élément composite pour revêtements et élément composite ainsi obtenu

(30) Priority: 17.05.2002 IT BO20020305
(43) Date of publication of application: 19.11.2003
(73) Proprietor: POINTEX S.p.A., 59100 Prato (IT)
(72) Inventor: Ranaldo, Angelo, 50041 Calenzano (Firenze) (IT)
(74) Representative: Lanzoni, Luciano

(56) References cited:
- EP-A- 0 599 101
- EP-A- 0 890 430
- WO-A-98/14656
- GB-A- 2 024 099
- SCHMIDT G F: "Kaschierung von Autopolsterstoffen mit Faservliesen" MELLIAND TEXTILBERICHTE, INTERNATIONAL TEXTILE REPORTS, MELLIAND TEXTILBERICHTE K.G. HEIDELBERG, DE, vol. 6, no. 6, 1992, pages 479-486, XP002118857 ISSN: 0341-0781

## Description

The present invention relates to a method for making a composite element for upholstery and to the composite element thus made.

In particular, the present invention applies to textiles used for covering walls, floors and motor vehicle interiors.

As is known, upholstery for vehicles (motor cars, caravans and the like) or for walls and floors (moquette) are usually made from textiles of natural or synthetic fibres. These textiles must not only be hard wearing but also pleasing to the eye, adding quality and attractive appearance to the parts covered. Textile coverings may also be advantageously used for acoustic insulation.

Depending on the parts to be covered, upholstery textiles may be made in various different ways. For example, in the case of floor mats for motor cars and the like, the fabric must be very resistant and, consequently, must be very thick. Preferably, to confer greater mechanical strength, the textile may be coated or edged with latex or plastic resins.

Prior art textiles, however, have numerous disadvantages, due mainly to their production cost. The high production cost of these textiles can be attributed largely to the designs made on the visible surface. These designs, which are made according to customary weaving technology involve complex and hence, expensive processes.

Another factor that contributes to the high production costs of upholstery textiles is their thickness. Indeed, as mentioned above, to improve their mechanical strength and acoustic insulation properties, the textiles must be very thick. In the light of the above, they must be woven from a larger number of fibres or using thicker fibres, which means higher production costs.

The present invention therefore has for an object to provide a method for making a composite element for upholstery and the composite element made according to the method, which can overcome the above mentioned disadvantages.

The invention has for an object, in particular, to provide a composite element for upholstery with the same pleasing qualities as a customary textile but which is extremely economical.

Another object of the invention is to provide a composite element for upholstery that is versatile and suitable for use on any surface to be covered.

Yet another object of the invention is to provide a method for making a composite element for upholstery that is economical in terms of production costs.

These objects and others, which shall become more readily apparent in the course of the description that follows, are achieved, in accordance with the present invention, by a method for making a composite element for upholstery comprising the characteristics defined in claim 1 and in the claims dependent on claim 1; and by a composite element for upholstery comprising the characteristics defined in claim 7 and in the claims dependent on claim 7.

Other technical characteristics and advantages will become more apparent from the detailed description, set out below, of a preferred non-restricting embodiment of a method, according to the invention, for making a composite element for upholstery and the composite element made according to the method. The description is set out below with reference to the accompanying drawings which are provided solely for purposes of illustration without restricting the scope of the invention and in which:
- Figure 1 is a schematic view, partly in cross section, of a composite element for upholstery according to the present invention;
- Figure 2 is an exploded view of the composite element of Figure 1;
- Figure 3 schematically illustrates a step in the production of the composite element of Figure 1.

With reference to the accompanying drawings, the numeral 1 denotes in its entirety a composite element for upholstery.

The composite element 1 comprises a fabric 2 having a visible upper surface 2a and an underside 2b opposite the upper surface 2a. More specifically, the fabric 2 may be one of many different types of fabric, depending on the parts to be covered, and presents, on its visible upper surface 2a, a design that may also vary according to the use of the composite element 1. Advantageously, the fabric 2 may consist of moquette or any other known type of fabric, for example circular and/or shuttle weave fabric made from endless or staple fibre of polyester, polypropylene, cotton, nylon and other natural or synthetic fibres.

A felt 3 is associated with the underside 2b of the fabric 2 to form a lower layer of the composite element 1.

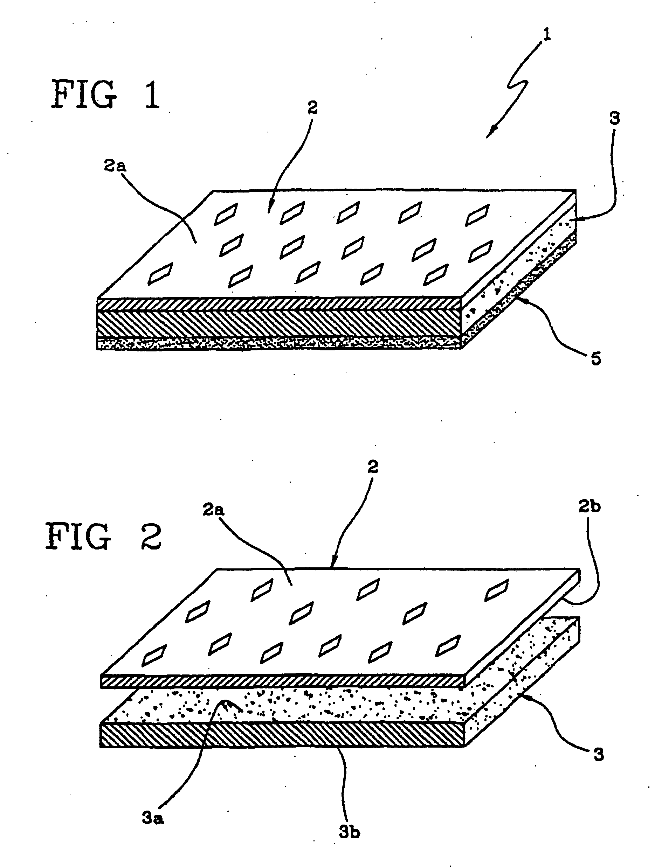

Looking in more detail, with reference to Figure 2, the felt 3 has an upper surface 3a associated with the underside 2b of the fabric, and an underside 3b opposite the upper surface 3a. The felt 3 is advantageously made by carding and needlepunching of single-colour fibres or a mix of different fibres. Further, the felt does not have any design and is made from fibres with a low production cost.

The felt is associated with the fabric by needlepunching or any other equivalent process of known type, as described in more detail below.

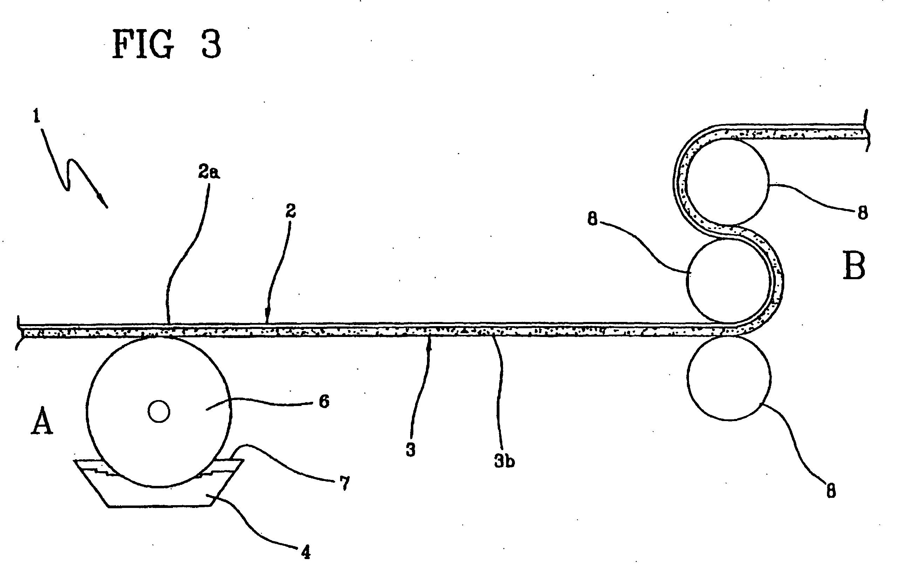

The composite element 1 also comprises a resin binder 4 (shown schematically in Figure 3), of known type and therefore not further described, spread on the underside (3b) of the felt 3 in order to densify the fibres of the felt 3 and consolidate them with the fabric 2.

Advantageously, composite element 1 may also comprise a finishing layer 5 designed to confer added mechanical strength on the composite element 1. More specifically, as illustrated purely by way of example in Figures 1 and 2, the finishing layer 5 is associated with the underside 3b of the felt 3.

The finishing layer 5 preferably consists of a plastic resin of known type and therefore not further described, spread on the underside 3b of the felt 3 by coating, impregnating, padding or other suitable process.

It should be noted that the nature of the finishing layer 5 varies according to the parts to be covered by the composite element 1 and on what the latter is to be used for.

Below is description of the method for making the composite element 1 whose structure is described above.

After laying out the fabric 2 of the type described above, the felt 3 is joined with the fabric 2 itself. More specifically, the upper surface 3a of the felt 3 is placed in contact with the underside 2b of the fabric 2.

The step of joining the felt 3 with the fabric 2 is accomplished by needlepunching. This process, which is well known in the textile industry, enables the fibres of the felt 3 to penetrate the fabric 2, thus joining the felt 3 to the fabric 2. Advantageously , the step of associating the felt 3 with the fabric 2 may also be accomplished by other suitable processes known in the textile industry, such as, for example, stitching, gluing or flaming. More specifically, the flame process consists in heating the fabric 2 so as to fuse the fibres of the felt 3 with those of the fabric 2.

Next, the resin binder 4 is applied to the felt 3 in order to consolidate the felt 3 with the fabric 2.

As illustrated in Figure 3, this step comprises a first step of spreading the resin binder 4 on the underside 3b of the felt 3. Once the felt 3 and the fabric 2 have been coupled with each other, they are passed through a first station A where a roller 6 inside a tank 7 containing the resin binder 4 spreads the binder 4 on the underside 3b. Next, the fabric 2 and the felt 3 are passed through a second station B where a series of calenders 8 press the composite element 1 in order to consolidate it, binding the fabric 2 and the felt 3 to each other.

Again, the nature of the resin binder 4 may vary depending on what the composite element 1 is used for. For example, the resin binder 4 used may vary in hardness to confer the required degree of pliability or rigidity on the composite element 1.

Lastly, the finishing layer 5 may be coupled with the felt 3.

In the embodiment described above, the finishing layer 5 consists of a plastic resin spread on the underside 3b of the felt 3.

The invention has important advantages.

First and foremost, the composite element 1 for upholstery according to the invention has a very low cost of production. The felt 3, which is made from low-cost fibres, adds weight and bulk to the element 1 and, at the same time, acts as support for the fabric 2.

Thus, the fabric 2 simply covers the felt 3 and may advantageously consist of a thin layer. Consequently, the fabric 2 may be made with designs or patterns of various kinds on its visible upper surface 2a, without increasing production costs.

Moreover, the method for making the composite element 1 is also simple and economical since it is based on processes that are well known and widely used in the textile industry.

Another advantage is the fact that the composite element 1 is very versatile and can be adapted to any part to be covered. For example, if the composite element 1 has to be used as a floor mat for a motor car, a finishing layer 5 made from the aforementioned plastic resin may be used to confer mechanical strength on the composite element 1.

For covering walls and interiors, on the other hand, the underside of the felt 3 may be applied directly to the part to be covered without further processing.

## Claims

1. A method for making a composite element for upholstery, **characterised in that** it comprises the following steps:
- laying out a fabric (2) presenting a visible upper surface (2a);
- joining a felt (3) to the underside (2b) of the fabric (2) opposite the upper surface (2a); and
- spreading a resin binder (4) on the underside (3b) of the felt (3) and pressing the composite element (1) in order to densify the fibres of the felt (3) and consolidate the felt (3) with the fabric (2).

2. The method according to claim 1, **characterised in that** the step of joining the felt (3) to the underside (2b) of the fabric (2) is performed by needlepunching the felt (3) on to the fabric (2).

3. The method according to claim 1, **characterised in that** the step of joining the felt (3) to the underside (2b) of the fabric (2) comprises a sub-step of heating the felt (3) so that the fibres of the felt (3) are fused with those of the fabric (2).

4. The method according to any of the foregoing claims, **characterised in that** the step of pressing the composite element (1) is accomplished by calendering the felt (3) and the fabric (2).

5. The method according to any of the foregoing claims, **characterised in that** it further comprises the step of applying a finishing layer (5) to the felt (3).

6. The method according to the previous claim, **characterised in that** the step of applying the finishing layer (5) to the felt (3) comprises the sub-step of spreading a plastic resin on the underside (3b) of the felt (3).

7. A composite element for upholstery, **characterised in that** it comprises:
- a fabric (2) having a visible upper surface (2a) and an underside (2b) opposite the upper surface;
- a felt (3) joined to the underside (2b) of the fabric (2); and
- a resin binder (4) spread on the underside (3b) of the felt (3) and pressed with the felt (3) in order to densify the fibres of the felt (3) and consolidate the felt (3) with the fabric (2).

8. The composite element according to claim 7, **characterised in that** the felt (3) and the fabric (2) are joined to each other by needlepunching.

9. The composite element according to claim 7, **characterised in that** the resin binder (4) acts on the felt (3) and on the fabric (2).

10. The composite element according to any of the foregoing claims from 7 to 9, **characterised in that** it further comprises a finishing layer (5) associated with the felt (3).

11. The composite element according to claim 10, **characterised in that** the finishing layer (5) comprises a plastic resin spread on the underside (3b) of the felt (3) opposite the visible upper surface (2a) of the fabric (2).

## Revendications

1. Un procédé de fabrication d'un élément composite pour revêtements, **caractérisé en ce qu'**il comprend les phases suivantes :
- disposer un tissu (2) présentant une surface supérieure (2a) visible ;
- unir un feutre (3) au dessous (2b) du tissu (2) opposé à la surface supérieure (2a) ; et
- étaler un liant de résine (4) sur le dessous (3b) du feutre (3) et compresser l'élément composite (1) afin de densifier les fibres du feutre (3) et de compacter le feutre (3) avec le tissu (2).

2. Le procédé selon la revendication 1, **caractérisé en ce que** la phase d'union du feutre (3) au dessous (2b) du tissu (2) est effectuée par piquage à l'aiguille du feutre (3) sur le tissu (2).

3. Le procédé selon la revendication 1, **caractérisé en ce que** la phase d'union du feutre (3) au dessous (2b) du tissu (2) comprend une sous-phase consistant à chauffer le feutre (3) de manière à ce que les fibres du feutre (3) soient amalgamées à celles du tissu (2).

4. Le procédé selon l'une quelconque des revendications précédentes, **caractérisé en ce que** la phase de compression de l'élément composite (1) est effectuée par calandrage du feutre (3) et du tissu (2).

5. Le procédé selon l'une quelconque des revendications précédentes, **caractérisé en ce qu'**il comprend en outre la phase consistant à appliquer une couche de finition (5) sur le feutre (3).

6. Le procédé selon la revendication précédente, **caractérisé en ce que** la phase d'application de la couche de finition (5) sur le feutre (3) comprend la sous-phase consistant à étaler une résine plastique sur le dessous (3b) du feutre (3).

7. Un élément composite pour revêtements, **caractérisé en ce qu'**il comprend :
- un tissu (2) ayant une surface supérieure (2a) visible et un dessous (2b) opposé à la surface supérieure ;
- un feutre (3) uni au dessous (2b) du tissu (2) ; et
- un liant de résine (4) étalé sur le dessous (3b) du feutre (3) et compressé avec le feutre (3) afin de densifier les fibres du feutre (3) et de compacter le feutre (3) avec le tissu (2).

8. L'élément composite selon la revendication 7, **caractérisé en ce que** le feutre (3) et le tissu (2) sont unis l'un à l'autre par piquage à l'aiguille.

9. L'élément composite selon la revendication 7, **caractérisé en ce que** le liant de résine (4) agit sur le feutre (3) et sur le tissu (2).

10. L'élément composite selon l'une quelconque des revendications précédentes de 7 à 9, **caractérisé en ce qu'**il comprend en outre une couche de finition (5) associée au feutre (3).

11. L'élément composite selon la revendication 10, **caractérisé en ce que** la couche de finition (5) comprend une résine plastique étalée sur le dessous (3b) du feutre (3) opposé à la surface supérieure (2a) visible du tissu (2).

## Patentansprüche

1. Verfahren zur Herstellung eines Verbundelementes für Polsterungen, **dadurch gekennzeichnet, dass** es die folgenden Phasen enthält:
- Auslegen eines Gewebes (2), das eine sichtbare obere Oberfläche (2a) aufweist;
- Verbinden einer Filzlage (3) mit der Unterseite (2b) des Gewebes (2), entgegengesetzt von der oberen Oberfläche (2a); und
- Auftragen eines Harzbinders (4) auf der Unterseite (3b) der Filzlage (3) und Pressen des Verbundelementes (1), um die Fasern der Filzlage (3) zu verdichten und die Filzlage (3) mit dem Gewebe (2) zu kompaktieren.

2. Verfahren nach Patentanspruch 1, **dadurch gekennzeichnet, dass** die Phase des Verbindens der Filzlage (3) mit der Unterseite (2b) des Gewebes (2) durch Vernadelung der Filzlage (3) an dem Gewebe (2) erfolgt.

3. Verfahren nach Patentanspruch 1, **dadurch gekennzeichnet, dass** die Phase des Verbindens der Filzlage (3) mit der Unterseite (2b) des Gewebes (2) eine Unterphase des Erhitzens der Filzlage (3) enthält, so dass die Fasern der Filzlage (3) mit denen des Gewebes (2) verschmolzen werden.

4. Verfahren nach einem beliebigen der vorstehenden Patentansprüche, **dadurch gekennzeichnet, dass** die Phase des Pressens des Verbundelementes (1) durch das Kalandern der Filzlage (3) und des Gewebes (2) ausgeführt wird.

5. Verfahren nach einem beliebigen der vorstehenden Patentansprüche, **dadurch gekennzeichnet, dass** es ausserdem die Phase des Anbringens einer Fertigstellungslage (5) an der Filzlage (3) enthält.

6. Verfahren nach dem vorstehenden Patentanspruch, **dadurch gekennzeichnet, dass** die Phase des Anbringens der Fertigstellungslage (5) an der Filzlage (3) eine Unterphase des Auftragens eines Kunststoffharzes auf die Unterseite (3b) der Filzlage (3) enthält.

7. Verbundelement für Polsterungen, **dadurch gekennzeichnet, dass** es wie folgt enthält:
- ein Gewebe (2) mit einer sichtbaren oberen Oberfläche (2a) und einer Unterseite (2b), entgegengesetzt von der oberen Oberfläche;
- eine Filzlage (3), verbunden mit der Unterseite (2b) des Gewebes (2); und
- einen Harzbinder (4), aufgetragen auf die Unterseite (3b) der Filzlage (3) und gepresst mit der Filzlage (3), um die Fasern der Filzlage (3) zu verdichten und die Filzlage (3) mit dem Gewebe (2) zu kompaktieren.

8. Verbundelement nach Patentanspruch 7, **dadurch gekennzeichnet, dass** die Filzlage (3) und das Gewebe (2) durch Vernadelung miteinander verbunden sind.

9. Verbundelement nach Patentanspruch 7, **dadurch gekennzeichnet, dass** der Harzbinder (4) auf die Filzlage (3) und auf das Gewebe (2) wirkt.

10. Verbundelement nach einem beliebigen der vorstehenden Patentansprüche von 7 bis 9, **dadurch gekennzeichnet, dass** es ausserdem eine Fertigstellungslage (5) enthält, die mit der Filzlage (3) verbunden ist.

11. Verbundelement nach Patentanspruch 10, **dadurch gekennzeichnet, dass** die Fertigstellungslage (5) ein Kunststoffharz enthält, aufgetragen auf die Unterseite (3b) der Filzlage (3), entgegengesetzt von der sichtbaren Oberfläche (2a) des Gewebes (2).
